# EUROPEAN PATENT APPLICATION

(11) **EP 1 655 272 A1**
(43) Date of publication of application: **10.05.2006**
(21) Application number: 04026194.3
(22) Date of filing: 04.11.2004
(51) Int. Cl.: C04B 24/26, C08F 290/06, C08F 220/26

(54) **Superplasticizers for extending the workability of mortars**

(71) Applicant: Mapei S.p.A., I-20158 Milano (IT)
(72) Inventor: Clemente, Paolo, 20158 Milano (IT); Ferrari, Giorgio, 20158 Milano (IT); Gamba, Mariele, 20158 Milano (IT); Squinzi, Marco, 20158 Milano (IT); Surico, Francesco, 20158 Milano (IT); Badesso, Lino, 20158 Milano (IT)
(74) Representative: Minoja, Fabrizio

(57) **Abstract**

Cement additives useful as superplasticizers, which considerably extend the workability of concrete and other cement mixtures in the fresh and in the plastic state, are disclosed.

The additives according to the invention are obtained by copolymerising: (i) an ethylenically unsaturated (poly)alkylene glycol ether monomer, (ii) an unsaturated monocarboxylic ester monomer represented by the general formula (II) 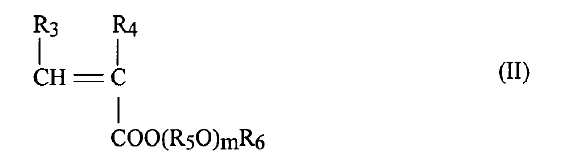 wherein R₃ and R₄ are each hydrogen atoms or methyl, R₅O is a C₂-C₃ oxyalkylene group, m is a number from 1 to 4 and R₆ is C₁-C₃₀ alkyl group;
and (iii) an unsaturated ester monomer represented by the general formula (III) 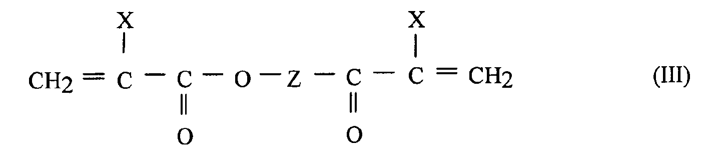 where

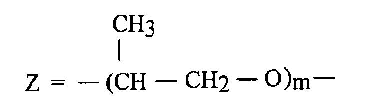

X is H or CH₃ and m is an integer from 2 to 50, optionally in the presence of other monomers.

## Description

The present invention provides new cement additives useful as superplasticizers, which considerably extend the workability of concrete and other cement mixtures in the fresh and in the plastic state, allowing to maintain high "slump" and "flow" values for longer periods in comparison with the prior art superplasticizers. Particularly, the superplasticizers of the present invention are capable of displaying excellent initial workability and retain their dispersion ability for longer periods of time even in a high water reducing ratio range. At the same time, the superplasticizers of the present invention exhibit high cement dispersing ability at low addition levels and do not retard the cement hydration, allowing to develop high early age mechanical strength even in unfavourable climatic conditions, such as those characterised by low temperatures typical of winter time. A further objective of the present invention is to provide new superplasticizers with the aforementioned properties which are characterised by an intrinsic low air-entraining effect.

### BACKGROUND OF THE INVENTION

Superplasticizers are extensively used in concrete technology to improve the performances and characteristics of cement mixtures, both in the fresh and in the hardened state. Their addition improves the rheology of cement mixtures by strongly reducing their viscosity in the fresh and in the plastic state and makes the mixtures more workable and easy to cast. Superplasticizers can be used in concrete for three different purposes or a combination of these.
a) The addition of superplasticizers without reducing the mixing water produces flowing, self-compacting and self-levelling concrete which completely fills the moulds, even of complex shapes and in the presence of heavily reinforced components, without the necessity of the expensive and time consuming work of vibration. Such characteristics, by reducing the risks of voids in the structures, ensure the homogeneity of concrete and contribute to the improvement of the reliability of the work.
b) The increase of the workability produced by superplasticizers can be used to reduce the mixing water of concrete. By this way, it is possible to obtain cement mixtures which are characterised by low water to cement ratio in order to attain high early and ultimate strength and improved durability.
c) Superplasticizers can be used to reduce both water and cement, at a given workability and strength, in order to improve the characteristics of hardened concrete, by reducing creep, drying shrinkage and thermal strains caused by heat of hydration in mass concrete. Furthermore, the reduction of the cement content due to the use of superplasticizers allows clear benefits from an economical point of view.

The above demarcation, however, has become quite vague with the advent of high performance concrete and the development of new generation superplasticizers that provide significantly higher water reduction at high flowable consistencies. It is now possible, through the use of these cement additives, to obtain very low water to cement ratio, highly durable, self-levelling and yet quite cohesive high-strength concrete. These new generation superplasticizers are characterised by a main polymer chain bearing ionic groups with grafted polyoxyalkylene side chains and are generally referred to as polycarboxylate superplasticizers (PC), carboxylic acid ester superplasticizers (CAE) and polycarboxylate ether superplasticizers (PCE). Their superior effect, compared with the previous generation naphthalene sulfonate (NS) and melamine sulfonate (MS) based superplasticizer, is ascribed to the better dispersion of the cement grains caused by the polyoxyalkylene side chains, once these polymers are adsorbed onto the cement particles. The same factor is responsible for the better retention of the workability of PC, CAE and PCE in comparison with NS and MS superplasticizers.

This new class of cement additives can be obtained by polymerising unsaturated mono or dicarboxylic acids, such as acrylic, methacrylic, maleic and itaconic acids and their salts with monomers containing polyoxyalkylene chains of different type.

Japanese Patent 58-74552 first discloses a cement dispersant in which a polyalkylene glycol mono(meth)acrylic acid ester monomer, with number of oxyalkylene groups in the range 1-100, is polymerised with (meth)acrylic acid and, optionally, with a third monomer. These superplasticizers give concrete of the same fluidity with a smaller addition, compared to the known dispersants based on naphthalene sulfonate, without adverse effects on compressive strength.

United States Patent 4,471,100 claims cement dispersants in which a polyalkylene glycol monoallyl ether, with number of oxyalkylene groups in the range 1-100, is polymerised with maleic acid or anhydride and eventually with a third monomer. These copolymers show a better water-reducing effect even in small ratio of addition compared to the conventional cement dispersing agent based on naphthalene sulfonate and do not cause any appreciable adverse effects on the other properties of concrete.

United States Patent 5,362,324 discloses crosslinked superplasticizers obtained by polymerising a) (meth)acrylic acid, b) polyethyleneglycolmonomethylether-(meth)acrylate and c) polypropyleneglycol-di(meth)acrylate. These polymers are characterised by a low air-entraining effect and show much higher water reducing effect and better retention of the workability of concrete in the fresh and plastic state in comparison with the previous generation naphthalene sulfonate based superplasticizers. Concrete mixtures containing the claimed polymers maintain 80 per cent of the initial workability after 45 minutes from mixing, compared to the drop of the "slump" at 50 per cent of the initial value after the same period of time for concrete mixtures containing traditional based naphthalene sulfonate superplasticizer.

United States Patent 5,798,425 discloses a dispersing agent for hydraulic binders obtained by polymerising a) unsaturated dicarboxylic acid derivative, such as maleic acid, maleic acid monoesters, maleic acid monoamides, maleic anhydride, b) oxyalkylenglycol-alkenyl ethers, such as methyl polyethyleneglycol monovinyl ether and c) a vinylic polyalkyleneglycol, polysiloxane or ester compound. The polymers of this invention show an improved retention of the workability without introducing large amount of air pores into the binding agent mixtures. Cement mixtures containing the disclosed superplasticizers maintain almost the same workability after 60 minutes from mixing, compared to the reduction at 55 per cent of the initial value after the same period of time for mixtures containing traditional melamine based superplasticizers.

European Patent 0846090 discloses a concrete additive comprising copolymers consisting of structural units derived from a) an ethylenically unsaturated monomer having from 25 to 300 mole of oxyalkylene groups per mole of monomer, including methoxypolyethylene glycol (meth)acrylates and adducts of allyl alcohol with ethylene oxide and b) alkyl, alkenyl or hydroxyalkyl ester of an ethylenically unsaturated mono- or di-carboxylic acid, including C₁-C₁₈ linear and branched alkyl (meth)acrylates, C₁-C₁₈ linear and branched alkenyl (meth)acrylates, C₂-C₆ hydroxyalkyl (meth)acrylates and, optionally, a third monomer c) selected from an ethylenically unsaturated mono- or di-carboxylic acid. Concrete mixtures containing the claimed copolymers, or mixtures of the claimed polymers with other superplasticizers, maintain more than 80 per cent of the initial workability after 120 minutes from mixing, compared with the drop of the "slump" at less than 30 per cent of the initial value after the same period of time for concrete mixtures containing traditional based naphthalene sulfonate and melamine sulfonate superplasticizers.

These results, although represent a substantial improvement in comparison with the poor effectiveness and retention of the workability offered by naphthalene sulfonate and melamine sulfonate, are still unsatisfactory in many applications, as in the case of premix concrete, where the transportation of concrete by truck mixers from the mixing plant to the job site, due to the highly congested traffic in the urbanised areas, can take several hours. In these conditions, the state-of-art superplasticizers are poorly effective in preventing "slump-loss" and therefore it is necessary to restore the initial workability at the job site, before casting the concrete, by the addition of more water to the mixture. This operation, which is known as "concrete retempering", increase the water content of the concrete mixtures (water/cement ratio) and causes detrimental effects on the mechanical properties and the durability of hardened concrete. Therefore, in order to attain the proper retention of the workability, it is necessary to use higher dosages of superplasticizers, with the consequent retardation of the cement hydration reaction. This drawback slows down the development of the mechanical strength of the concrete and does not allow the early demoulding and the prompt reuse of the concrete moulds, causing a delay in the development of the whole procedure.

Another drawback associated with the use of the polycarboxylate superplasticizers is the tendency to entrain air bubbles in the concrete during the mixing, due to their surface activity. As a consequence, the uncontrolled entrainment of air bubbles may produce adverse effects on the mechanical strength development and on the appearance of the concrete. In order to overcome this disadvantages, defoamers are often blended with polycarboxylate superplasticizers but, being these substances insoluble in water, they tend to separate from the polymer solution and therefore their efficiency is reduced with the time of storage. Intrinsically low-foaming polycarboxylate superplasticizers are those described in United States Patent US 5,362,324 and US 5,798,425, both relating to polymers in which the defoaming agent is bonded to the polymer chain. By this way, the defoaming agent is stabilised in the polymer solution and the defoaming capacity is maintained for longer time. The defoaming efficiency of these polymers can be eventually further improved by the addition of external defoaming agents characterised by high stability in the polymer solution. In particular, United States Patent US 5,362,324 describes a low air-entraining superplasticizer obtained by termopolymerisation in which polypropylene-glycoldi-(meth)acrylate with molecular weight of approximately 280 to 3100 is copolymerised with (meth)acrylic acid and polyethyleneglycolmonomethylether-(meth)acrylate with molecular weight from 200 to 2000.

The object of the present invention is to provide new cement additives which solve the aforementioned problems and extend and maintain the initial workability of concrete and the other cement mixtures well beyond the limits of the known superplasticizers and do not retard the cement hydration, allowing to develop high early age mechanical strength even in unfavourable climatic conditions, such as those characterised by low temperatures typical of winter time.

### SUMMARY OF THE INVENTION

It has been found that superplasticizers derived from the copolymerisation of vinyl monomers containing oxyalkylene groups with specific monomers exhibit excellent extension of the workability and maintain the "slump" value longer compared to the prior art superplasticizers, without retarding the hardening of concrete. Furthermore, the new superplasticizer of the present invention are characterised by a low air-entraining effect, even in the absence of external defoaming agents.

Namely, the present invention provides a cement additive comprising a copolymer essentially consisting of the following structural units:
1. from 0.1 to 50 mole per cent of units derived from an ethylenically unsaturated (poly)alkylene glycol ether monomer represented by the general formula (I)

   YO(R₁O)ₙR₂ (I)

   wherein Y represents an alkenyl group containing 2 to 8 carbon atoms, the n R₁O groups are the same or different and each R₁O represents an oxyalkylene group containing 2 to 4 carbon atoms, R₂ represents a hydrogen atom or a hydrocarbon group containing 1 to 3 carbon atoms and n is the mean addition number of moles of the oxyalkylene groups and represents a number of 25 to 300.
   Specific examples of monomer represented by the above formula (I) include polyalkylene glycol vinyl ethers and, more particularly, compounds obtained by the addition of alkylene oxides to vinyl ethers, such as diethylene glycol monovinyl ether and 4-hydroxybutyl monovinyl ether.
2. from 25 to 95 mole per cent of units derived from an unsaturated monocarboxylic ester monomer represented by the general formula (II) 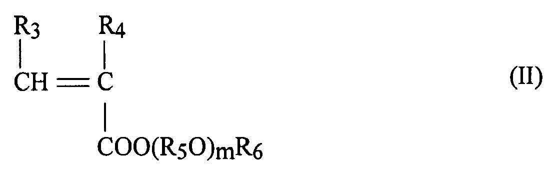 wherein R₃ and R₄ are either hydrogen atoms or methyl, R₅O is a C₂-C₃ oxyalkylene group, m is a number of 1 to 4 and R₆ is C₁-C₃₀ alkyl group.
   Specific examples of monomers represented by the above formula (II) include acrylic and methacrylic esters of mono-, di-, tri- and tetra-alkylene glycols blocked with an alkyl group at one end, such as 2-methoxyethanol, 2-ethoxyethanol, 2-butoxyethanol, 1-methoxy-2-propanol, 1-ethoxy-2-propanol, 1-propoxy-2-propanol, di(ethylene glycol) monomethyl ether, di(ethylene glycol) monoethyl ether, di(ethylene glycol) monobutyl ether, di(ethylene glycol) monoexyl ether, tri(ethylene glycol) monomethyl ether, tri(ethylene glycol) monoethyl ether.
3. from 0.05 to 5 mole per cent of units derived from unsaturated ester monomer represented by the general formula (III) 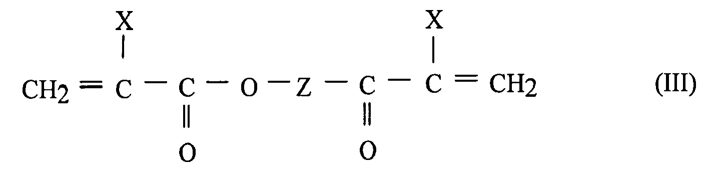 where
   X is H or CH₃ and m is an integer from 2 to 50. These monomers are preferably represented by polypropylene-glycol-di-(meth)acrylate with molecular weight of approximately between 280 and 11800, i.e. with m 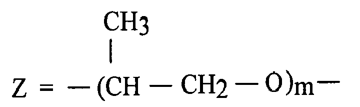 approximately between 2 and 200;
   and optionally
4. from 0 to 70 mole per cent of units derived from an unsaturated monocarboxylic acid and a salt thereof represented by the general formula (IV) 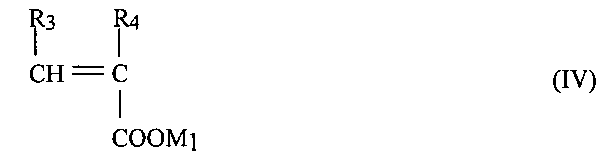
wherein R₃ and R₄ are each hydrogen atoms or methyl and M₁ is hydrogen atom, an alkaline metal, an alkaline earth metal, ammonium, an alkylammonium or substituted alkylammonium group.

Specific examples of monomers represented by the above formula (IV) include monocarboxylic acid monomers such as acrylic and methacrylic acid and salts thereof with alkali metals, ammonium, amines and substituted amines.

The copolymer according to the present invention may further comprise other comonomers, as far as the effects of the present invention are not adversely affected. Examples of such comonomers include vinylsulfonic acid, 2-acrylamido-2-methyl-1-propanesulfonic acid (AMPS), styrene, vinyl acetate and ester products of methoxy-polyalkylene glycol with (meth)acrylic acid.

Furthermore, it has been surprisingly found that, when the superplasticizers based on the above copolymer contain free low molecular weight glycols, their performances can be further improved. So, in addition to the above copolymer consisting of the units derived from the monomers of formulas (I), (II), (III) and (IV), the superplasticizer of the present invention may contain from 0 to 50 per cent by weight, referred to the weight of the copolymer derived from structure units of formulas (I), (II), (III) and (IV), of low molecular weight glycols represented by the general formula (V)

HO(R₅O)mR₆ (V)

wherein R₅O is a C₂-C₃ oxyalkylene group, m is a number of 1 to 4 and R₆ is C₁-C₃₀ alkyl group.

Specific examples of compounds represented by the above formula (V) include mono-, di-, tri- and tetra-alkylene glycols blocked with an alkyl group at one end, such as 2-methoxyethanol, 2-ethoxyethanol, 2-butoxyethanol, 1-methoxy-2-propanol, 1-ethoxy-2-propanol, 1-propoxy-2-propanol, di(ethylene glycol) monomethyl ether, di(ethylene glycol) monoethyl ether, di(ethylene glycol) monobutyl ether, di(ethylene glycol) monoexyl ether, tri(ethylene glycol) monomethyl ether, tri(ethylene glycol) monoethyl ether.

The copolymer of the present invention can be produced according the conventional methods of polymerisation, by solution or bulk polymerisation.

In the case of solution polymerisation, solvents which can conveniently be used include water, alcohols such as methyl alcohol, ethyl alcohol and isopropyl alcohol, aromatic or aliphatic hydrocarbons such as benzene, toluene, xylene, cyclohexane and n-hexane, ester compounds, such as ethyl acetate, ketone compounds such as acetone and methyl ethyl ketone, and cyclic ethers such as tetrahydrofuran and dioxane. However, it is preferable to use at least one kind selected from the group consisting of water and lower alcohols having 1 to 4 carbon atoms because of the solubility of the raw monomers and the resulting copolymer. Among these, water is more preferable because the solvent-removing process can be omitted.

Examples of polymerisation initiators which can be conveniently used in aqueous solution include persulfate salts such as ammonium persulfate, sodium persulfate and potassium persulfate; hydrogen peroxide, aqueous azo initiators such as 2,2'-azobis(2-amidinopropane) dihydrochloride and 2,2'-azobis(2-methylpropionamide)dihydrate. Polymerisation accelerators can be simultaneously used with the polymerisation initiators. Examples thereof include: alkali metal hydrogensulfites such as sodium hydrogensulfite, sodium metabisulfite, sodium hypophosphite, Fe (II) salts such as Mohr's salts, sodium hydroxymethanesulfite dihydrate, hydroxylamine hydrochloride, thiourea, L-ascorbic acid (salt) and isoascorbic acid (salt). Among these, the combination of hydrogen peroxide and promoters such as L-ascorbic acid (salt) is preferable.

In addition, when carrying out the solution polymerisation in solvents such as aromatic or aliphatic hydrocarbons, ester compounds and ketone compounds, radical polymerisation initiators such as peroxides (for example, benzoyl peroxide, lauroyl peroxide and sodium peroxide), hydroperoxides (for example, t-butyl hydroperoxide and cumene hydroperoxide) and azo compounds (for example, azobisisobutyronitrile) can be conveniently used.

The bulk polymerisation can be carried out by use of radical polymerisation initiators such as peroxides (for example, benzoyl peroxide, lauroyl peroxide and sodium peroxide), hydroperoxides (for example, t-butyl hydroperoxide and cumene hydroperoxide) and azo compounds (for example, azobisisobutyronitrile).

The reaction temperature is not especially limited for the production of the copolymer of the present invention and it is related to the particular type or system of initiator used. According to this, the reaction temperature is in the range of 30 to 90°C. For example, when persulfate salt is used as an initiator, the polymerisation temperature is in the range of 40 to 90°C, preferably 50 to 85°C, more preferably 60 to 80°C. In addition, when the combination of hydrogen peroxide and L-ascorbic acid (salt) as promoter is used as an initiator, the reaction temperature is, for example, in the range of 30 to 90°C, preferably 35 to 85°C, more preferably 40 to 80°C.

The polymerisation time is not especially limited, ranging from 0.5 to 10 hours, preferably 0.5 to 8 hours, more preferably from 1 to 6 hours.

In order to control the molecular weight of the resulting copolymers, chain transfer agents such as 2-mercaptoethanol, mercaptoacetic acid, 2-mercaptopropionic acid, 3-mercaptopropionic acid, alkylmercaptans an their mixtures can be conveniently used. It is preferable that the copolymer according to the present invention have a weight-average molecular weight of 8,000 to 1,000,000, still preferably 10,000 to 300,000 (in terms of polyethylene glycol or polysaccharide standards as determined by gel permeation chromatography).

The low molecular weight glycols of formula (V) which are useful in improving the performances of the copolymers of the present invention, may be incorporated in the superplasticizer of the present invention in different ways. These compounds can be added to the copolymers after the polymerisation reaction. In this case, the desired amount of compounds of formula (V) is added to the copolymer solution under stirring at the selected temperature until it is completely dissolved. The temperature for the addition and dissolution of compounds of formula (V) is not particularly critical and can be in the range of ambient temperature to 90°C.

The compounds of formula (V) can also be present in the superplasticizer of the present invention as the residue of the production of monomer of formula (II). In fact, the production process of monomer of formula (II) is based on the esterification reaction between an unsaturated monocarboxylic acid and the aforementioned compounds based on mono-, di-, tri- and tetra-alkylene glycols blocked with an alkyl group at one end. By properly modifying the reaction conditions of the esterification for the production of monomer of formula (II), it is possible to obtain a reaction product containing the desired residual amount of the compounds of formula (V), which is then incorporated directly in the superplasticizer of the present invention during the subsequent polymerisation process.

Furthermore, the compounds of formula (V) can be present in the superplasticizers of the present invention as the result of hydrolytic cleavage of the ester bond of the structural units derived from monomer of formula (II). The cleavage of the ester bond may occur at different extent according to the pH conditions during the polymerisation of the monomers of the present invention. Compounds of formula (V) can also be formed when the superplasticizers of the present invention are added to the cement mixtures. In this case, the strongly alkaline conditions typical of the cement mixtures favour the formation of compounds of formula (V) through the alkaline hydrolysis of the ester bond of the structural units derived from monomer of formula (II).

The superplasticizer of the present invention is compatible and may be used in combination with other high performance water reducing agents, particularly with the polycarboxylate superplasticizers already described in the prior-art. In this case, it is preferable from the viewpoint of maintaining the workability of the concrete mixtures, that the weight ratio of the superplasticizer of the present invention to the prior-art superplasticizers lies between 1:99 and 99:1, still preferably between 10:90 and 90:10, with the condition that the sum of the mixture of the different superplasticizers is 100 per cent by weight.

The superplasticizer of the present invention may be used in combination with other known concrete additives, such as air entraining agents, antifoaming agents, accelerating additives (particularly alkali-free and low alkali accelerating additives), retarding additives, thickening agents, shrinkage reducing agents and so on.

It is preferable that the amount of the superplasticizer of the present invention added to the cement mixtures is in the range 0.01 to 3.00 per cent by weight of cement, on a dry basis. The superplasticizer of the present invention can be used both in the form of aqueous solutions, generally with a solid content in the range from 10 to 70 per cent, preferably in the range from 15 to 50%, or in powder form, after removing water from the solution by evaporation, precipitation or salting out techniques. The powder form is preferred when the superplasticizer of the present invention is used for the production of premixed dry cement products, such as premixed mortars and other cement adhesives.

### DETAILED DESCRIPTION

The scope and the characteristics of the polymers of the present invention are further detailed in the following examples.

### EXAMPLE 1

105 g of deionised water, 386 g of polyethylene glycol vinyl ether derived from 4-hydroxybutyl monovinyl ether by the addition of 90 moles, on average, of ethylene oxide (average Mw 4,000) and 0.02 g of ferrous sulphate were charged in a glass reaction vessel equipped with mechanical stirrer, thermometer and reflux condenser. The system was purged with nitrogen and heated at 65°C until the mixture became homogeneous. Then, 121 g of methoxy ethyl acrylate, 8.6 g of polypropyleneglycol dimethacrylate of molecular weight 861 and 33.3 g of a 2 per cent solution of hydrogen peroxide were added dropwise, by separate funnels, over 3 hours to the reaction vessel. At the same time, an aqueous solution prepared by dissolving 0.9 g of L-ascorbic acid and 4.16 g of 3-mercaptopropionic acid in 87.1 g of deionised water was added to the reaction vessel dropwise over 3.5 hours by separate funnel. Once the addition of methoxy ethyl acrylate and polypropyleneglycol dimethacrylate was finished, 63 g of a 10 per cent aqueous solution of sodium persulfate was added in 1 hour. About 1020 g of superplasticizer according to the present invention were obtained, having a total solids content of about 50%. After this addition, the polymerised reaction mixture was diluted with 200 g of deionised water and cooled at 25°C. The resulting polymer solution was neutralised at pH 7 with an aqueous solution of sodium hydroxide. The characteristics of the resulting superplasticizer is shown in Table 1.

### EXAMPLE 2

105 g of deionised water, 386 g of polyethylene glycol vinyl ether derived from 4-hydroxybutyl monovinyl ether by the addition of 90 moles, on average, of ethylene oxide (average Mw 4,000) and 0.02 g of ferrous sulphate were charged in a glass reaction vessel equipped with mechanical stirrer, thermometer and reflux condenser. The system was purged with nitrogen and heated at 65°C until the mixture became homogeneous. Then, 121 g of methoxy ethyl acrylate, 8.6 g of polypropyleneglycol dimethacrylate of molecular weight 861 and 33.3 g of a 2 per cent solution of hydrogen peroxide were added dropwise, by separate funnels, over 3 hours to the reaction vessel. At the same time, an aqueous solution prepared by dissolving 0.9 g of L-ascorbic acid and 4.16 g of 3-mercaptopropionic acid in 87.1 g of deionised water was added to the reaction vessel dropwise over 3.5 hours by separate funnel. Once the addition of methoxy ethyl acrylate and polypropyleneglycol dimethacrylate was finished, 63 g of a 10 per cent aqueous solution of sodium persulfate was added in 1 hour. After this addition, the polymerised reaction mixture was diluted with 200 g and neutralised with an aqueous solution of sodium hydroxide at the reaction temperature and then cooled at 25°C. The final pH of the solution was pH = 8.5. About 1020 g of superplasticizer according to the present invention were obtained, having a total solids content of about 50%. The characteristics of the resulting superplasticizer is shown in Table 1.

### EXAMPLE 3

119 g of deionised water, 439 g of polyethylene glycol vinyl ether derived from 4-hydroxybutyl monovinyl ether by the addition of 150 moles, on average, of ethylene oxide (average Mw 6,500) and 0.02 g of ferrous sulphate were charged in a glass reaction vessel equipped with mechanical stirrer, thermometer and reflux condenser. The system was purged with nitrogen and heated at 65°C until the mixture became homogeneous. Then, 65.5 g of methoxy ethyl acrylate, 10.3 g of acrylic acid, 8.6 g of polypropyleneglycol dimethacrylate of molecular weight 861 and 69.83 g of a 2 per cent solution of hydrogen peroxide were added dropwise, by separate funnels, over 3 hours to the reaction vessel. At the same time, an aqueous solution prepared by dissolving 1.8 g of L-ascorbic acid and 2.91 g of 3-mercaptopropionic acid in 87.1 g of deionised water was added to the reaction vessel dropwise over 3.5 hours by separate funnel. Once the addition of methoxy ethyl acrylate and the other monomers was finished, 63 g of a 10 per cent aqueous solution of sodium persulfate was added in 1 hour. After this addition, the polymerised reaction mixture was diluted with 200 g of deionised water and cooled at 25°C. The resulting polymer solution was neutralised at pH 7 with an aqueous solution of sodium hydroxide. About 1060 g of superplasticizer according to the present invention were obtained, having a total solids content of about 50%. The characteristics of the resulting superplasticizer is shown in Table 1.

### EXAMPLE 4

105 g of deionised water, 386 g of polyethylene glycol vinyl ether derived from 4-hydroxybutyl monovinyl ether by the addition of 90 moles, on average, of ethylene oxide (average Mw 4,000) and 0.02 g of ferrous sulphate were charged in a glass reaction vessel equipped with mechanical stirrer, thermometer and reflux condenser. The system was purged with nitrogen and heated at 65°C until the mixture became homogeneous. Then, 104 g of methoxy ethyl acrylate, 8.6 g of polypropyleneglycol dimethacrylate of molecular weight 861, 6.5 g of 2-acrylamido-2-methyl-1-propanesulfonic acid (AMPS) and 33.3 g of a 2 per cent solution of hydrogen peroxide were added dropwise, by separate funnels, over 3 hours to the reaction vessel. At the same time, an aqueous solution prepared by dissolving 0.9 g of L-ascorbic acid and 4.16 g of 3-mercaptopropionic acid in 87.1 g of deionised water was added to the reaction vessel dropwise over 3.5 hours by separate funnel. Once the addition of methoxy ethyl acrylate and the other monomers was finished, 63 g of a 10 per cent aqueous solution of sodium persulfate was added in 1 hour. After this addition, the polymerised reaction mixture was diluted with 200 g of deionised and maintained for 30 minutes at the reaction temperature and at pH 8 with the addition of an aqueous solution of sodium hydroxide and then cooled at 25°C. About 1020 g of superplasticizer according to the present invention were obtained, having a total solids content of about 50%. The characteristics of the resulting superplasticizer is shown in Table 1.

### COMPARATIVE EXAMPLE 1

105 g of deionised water, 386 g of polyethylene glycol vinyl ether derived from 4-hydroxybutyl monovinyl ether by the addition of 90 moles, on average, of ethylene oxide (average Mw 4,000) and 0.02 g of ferrous sulphate were charged in a glass reaction vessel equipped with mechanical stirrer, thermometer and reflux condenser. The system was purged with nitrogen and heated at 65°C until the mixture became homogeneous. Then, 121 g of methoxy ethyl acrylate and 33.3 g of a 2 per cent solution of hydrogen peroxide were added dropwise, by separate funnels, over 3 hours to the reaction vessel. At the same time, an aqueous solution prepared by dissolving 0.9 g of L-ascorbic acid and 4.16 g of 3-mercaptopropionic acid in 87.1 g of deionised water was added to the reaction vessel dropwise over 3.5 hours by separate funnel. Once the addition of methoxy ethyl acrylate was finished, 63 g of a 10 per cent aqueous solution of sodium persulfate was added in 1 hour. About 1020 g of superplasticizer according to the present invention were obtained, having a total solids content of about 50%. After this addition, the polymerised reaction mixture was diluted with 200 g of deionised water and cooled at 25°C. The resulting polymer solution was neutralised at pH 7 with an aqueous solution of sodium hydroxide. The characteristics of the resulting superplasticizer is shown in Table 1.

**TABLE 1 Composition of superplasticizers of the present invention and Comparative Example 1.**

| Superplasticizer | Mw (Weight Average Molecular Weight) (1) | Mole ratio of monomer of formula I/II/III/IV | Other comonomers | Per cent of compounds of formula (V) (per cent by weight of copolymer) |
|---|---|---|---|---|
| EXAMPLE 1 | 105,000 | 1/9.3/0.1/0 | None | < 1 |
| EXAMPLE 2 | 85,000 | 1/9.3/0.1/0 | None | 8 |
| EXAMPLE 3 | 120,000 | 1/7.4/0.1/2.1 | None | < 1 |
| EXAMPLE 4 | 80,000 | 1/9.3/0.1/0 | AMPS | 5 |
| COMPARATIVE EXAMPLE 1 | 90,000 | 1/9.3/0/0 | None | < 1 |

(1) Measured by GFC according to the following experimental conditions:

| | |
|---|---|
| columns: | Water Ultrahydrogel 120, 250, 500, 1000 in series |
| eluent: | 0.05 M NaNO₃/Acetonitrile 80/20 v/v |
| flow rate: | 1 mL/min |
| injection: | 100 mL of 1.0% aqueous solution of sample |
| detector: | refractive index |
| column temperature | 40°C |
| molecular weight standards: | monodisperse polyethylene glycols with Mw between 750 and 700,000 |

### EXAMPLE 5

The polymer of Example 1 of the present invention has been compared, in mortar tests, with the superplasticizer of Comparative Example 1. The results are presented in the following Table 2. The mortars were prepared by using Type III portland cement according to ASTM C-150 (CEM I 52.5R according ENV 197/1). The different cement mixtures were prepared according ENV 196/1 method at the same W/C = 0.39. The behaviour of the different polymers was evaluated by measuring the flow of fresh mortars (drop table test) according to UNI 7044 method and the air entraining effect, according to DIN 18555, at the same dosage of the polymers (0.25% as dry additives by mass of cement).

**TABLE 2. Mortar tests using the superplasticizers of Example 4 of the present invention (Examples 1) in comparison with superplasticizer prepared according Comparative Example 1.**

| | | | | | |
|---|---|---|---|---|---|
| Normalised sand/cement ratio: | | | 3.0 | | |
| Water/cement ratio W/C: | | | 0.39 | | |
| Dosage of additives: Example 1 | | | 0.25% active matter by weight of cement | | |
| Comparative Example 1 | | | 0.25% active matter by weight of cement | | |

| Type of superplasticizer | Air content (%) | Flow (%) | Compressive Strength (MPa) | | |
|---|---|---|---|---|---|
| | | | 16 hours | 18 hours | 24 hours |
| EXAMPLE 1 | 7.5 | 110 | 12.0 | 17.1 | 30.0 |
| COMPARATIVE EXAMPLE 1 | > 23 | 112 | 5.9 | 9.7 | 17.5 |

The results of the mortar tests indicate that the presence of the monomer of formula (III) of the present invention, represented by polypropylene-glycoldi-(meth)acrylate, is essential in producing the superplasticizers which are characterised by low air entraining effect and high early mechanical strength.

### EXAMPLE 6

In this example, the results of mortar tests made by using the polymers of the present invention, prepared according to Examples from 1 to 4, and their mixtures with prior-art polycarboxylate superplasticizer (Dynamon SR1 by Mapei S.p.A.), are compared. The different cement mixtures were prepared according ENV 196/1 method at the same W/C = 0.47, by using CEM I 32.5R portland cement. The efficiency of the different superplasticizers as workability extenders was evaluated, according to UNI 7044 method, by measuring the flow of fresh mortars at different times from mixing (drop table test). Comparative tests by using naphthalene sulfonate superplasticizer (NS), melamine sulfonate superplasticizer (MS) and a prior-art polycarboxylate superplasticizer (Dynamon SR1 by Mapei) were also performed. The dosage of the different superplasticizers was adjusted in order to attain the same value of the initial flow and 1% by weight of an antifoaming agents based on alkoxylated fatty alcohol (Rolfor EP3-L by Cesalpinia) was added to all the samples, just before the test. The early age mechanical strength development was measured after 18 hours of curing at 25°C and 95% relative humidity in steel prismatic moulds (40 x 40 x 160 mm). The comparative results of the mortar tests are reported in the following Table 3.

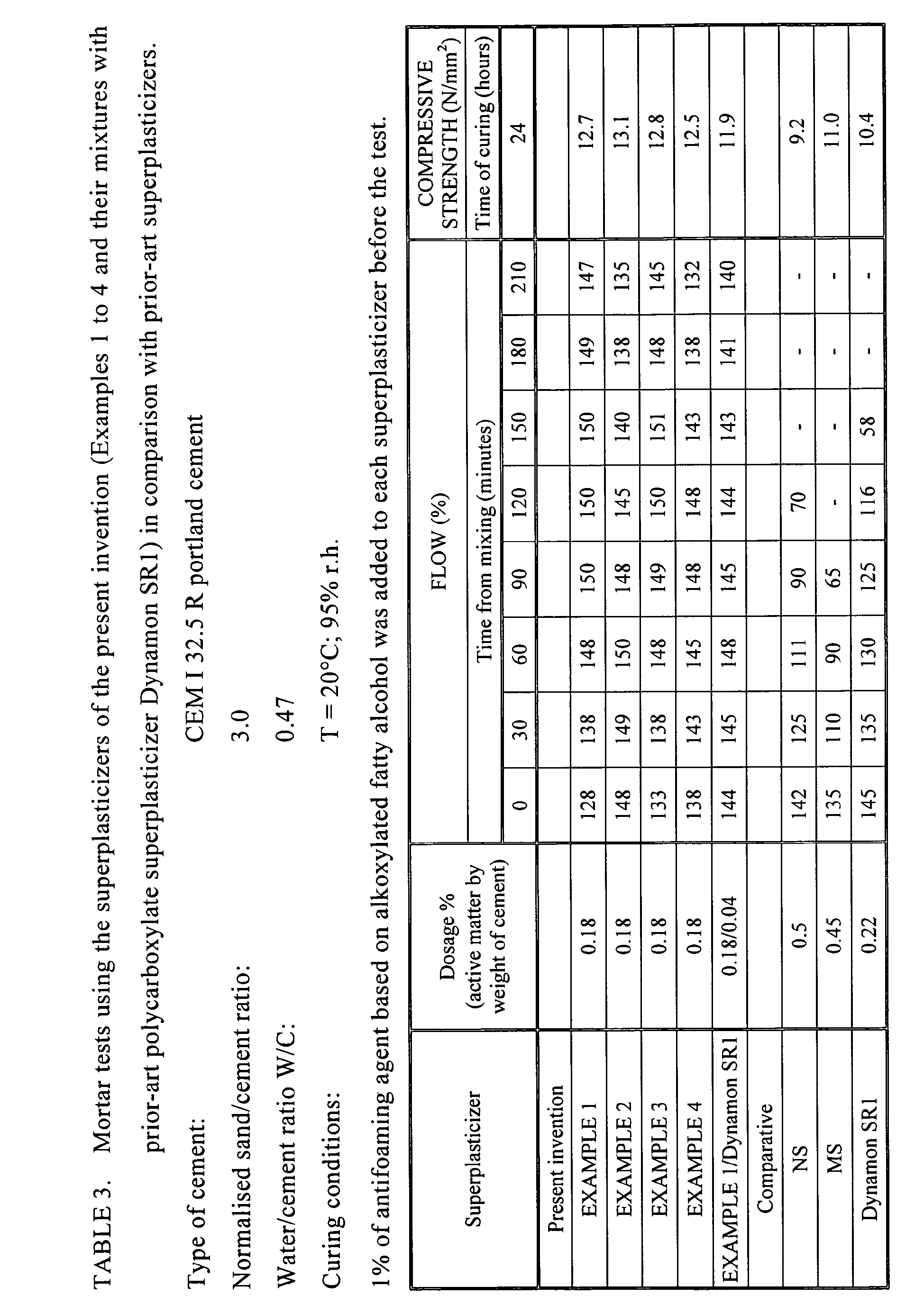

The results of Table 3 clearly indicate that the superplasticizers of the present invention are definitely superior as workability extenders not only to the traditional superplasticizers, such as naphthalene sulfonate and melamine sulfonate, but also in comparison with the prior-art polycarboxylate superplasticizers. In fact, form Table 3 it can be seen that the superplasticizers of the present invention maintain the workability of cement mixtures for more the three hours from mixing, while prior-art superplasticizers, such as those described in European Patent 0846090, are effective in preventing "slump-loss" for periods of time no longer than two hours. Furthermore, it is evident the beneficial effect of low molecular weight glycols of formula (V) in improving the initial flow of cement mixtures and the excellent results obtained by the combination of the superplasticizers of the present invention with prior-art polycarboxylates.

Finally, the results of Table 3 clearly indicate that the superplasticizers of the present invention are highly effective at very low dosages and do not cause any retardation in the cement hydration in normal temperature curing conditions.

### EXAMPLE 7

In this example the results of concrete tests made by using the polymers of the present invention are compared with those based on naphthalene sulfonate (NS), melamine sulfonate (MS) and polycarboxylate prior-art superplasticizers. 1% by weight of an antifoaming agents based on alkoxylated fatty alcohol (Rolfor EP3-L by Cesalpinia) was added to each samples, just before the test. All the concrete mixtures were prepared using Type III portland cement according ASTM C-150 (CEM I 52.5R according ENV 197/1), with the same water/cement ratio and aggregate/cement ratio. The coarse aggregate maximum diameter was 20 mm. All the concrete mixtures were cured in 150 mm stainless cubic moulds, at low temperature (5°C) and compressive strength was measured after 24 hours of curing in these conditions. The comparative results of the concrete tests are reported in the following Table 4.

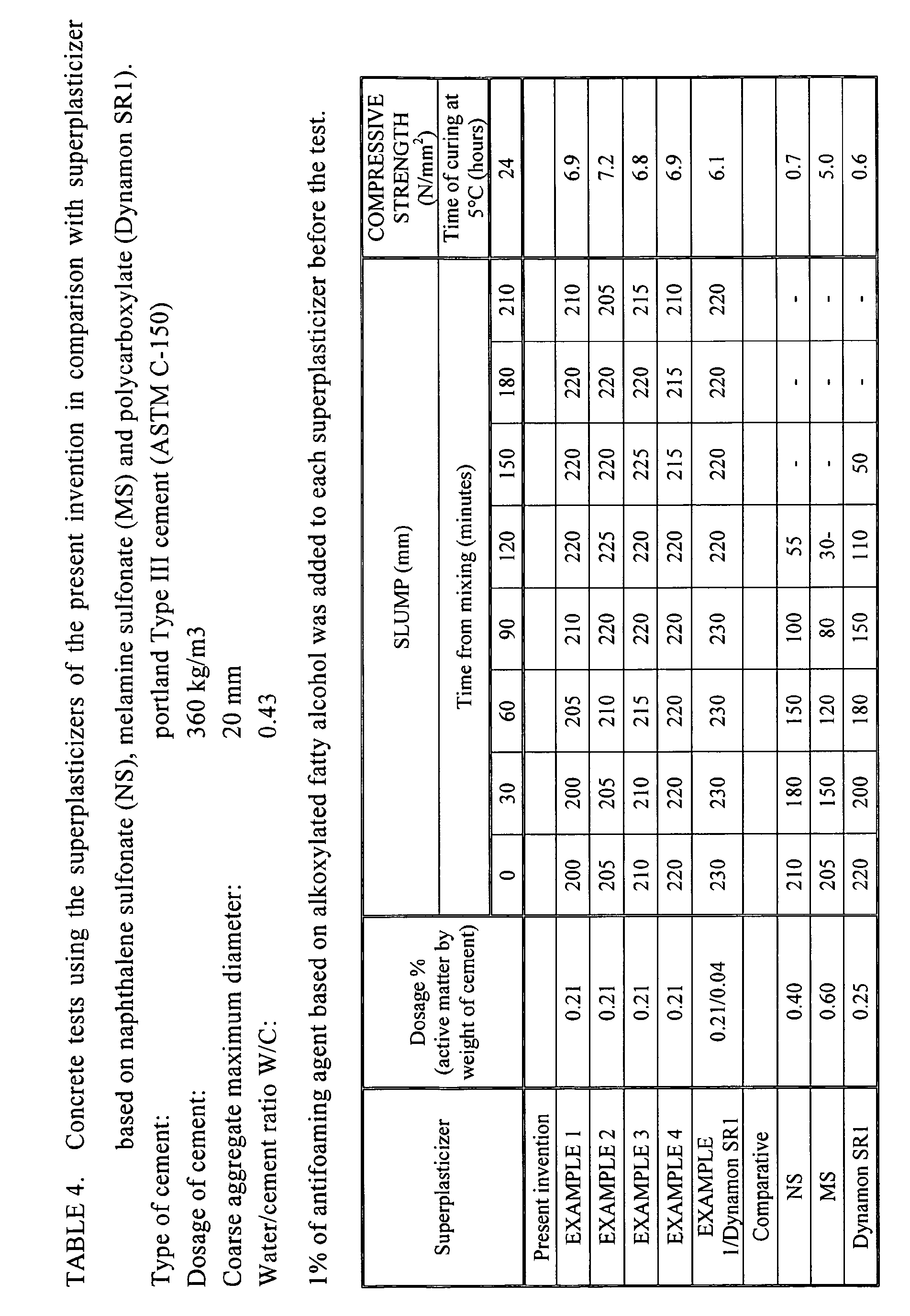

The results of the concrete tests of Table 4 clearly indicate that the superplasticizers of the present invention are able to extend the workability of concrete mixtures for longer periods of time in comparison with the prior-art superplasticizers based on naphthalene sulfonate (NS), melamine sulfonate (MS) and polycarboxylate (PC). At the same time, the superplasticizers of the present invention do not retard the cement hydration and allow to develop high early mechanical strength even in unfavourable climatic conditions, such as those characterised by low temperatures typical of winter time.

### EXAMPLE 8

In this example, the superplasticizers of the present invention has been evaluated in combination with a commercial alkali-free accelerating additive based on mixtures of aluminium and manganese complexes with carboxylic and halogendric acid (Mapequick AFD-03 by Mapei). Cement pastes were prepared by mixing portland cement (Cement type CEM I 42,5 R), water (water to cement ratio, W/C = 0.36) and 0.25 per cent, as active matter by weight of cement, of the superplasticizer of Example 4 of the present invention. The accelerating additive (Mapequick AFD-03) was then added to the fresh cement pastes at the dosage of 10 per cent by weight of cement, and the end setting time of the resulting mixtures was measured according to EN 196/3. The results have been compared with those from similar tests performed by using a commercial polycarboxylate superplasticizer described in the prior-art (Dynamon SR1 by Mapei) at the same dosage. The results are shown in Table 5.

**TABLE 5 End setting times of cement pastes containing alkali-free accelerating additive and the superplasticizer of the present invention in comparison with prior-art polycarboxylate superplasticizer.**

| Superplasticizer | Dosage % (active matter by weight of cement) | Accelerating additive | Dosage % (by weight of cement) | End setting time (min:sec) |
|---|---|---|---|---|
| Present invention EXAMPLE 4 | 0.25 | Mapequick AFD-03 | 10 | 5:30 |
| Comparative Dynamon SR3 | 0.25 | Mapequick AFD-03 | 10 | 5:50 |

The results of the test of Table 5 indicate that the use of the superplasticizer of the present invention in combination with alkali-free accelerating additives does not substantially modify the end setting time of cement mixtures in comparison with those containing the traditional polycarboxylate superplasticizers.

## Claims

1. A cement additive comprising a copolymer essentially consisting of the following structural units:
(a) from 0.1 to 50 mole per cent of units derived from an ethylenically unsaturated (poly)alkylene glycol ether monomer represented by the general formula (I)
YO(R₁O)ₙR₂ (I)
wherein Y represents an alkenyl group containing 2 to 8 carbon atoms, the n R₁O groups are the same or different and each R₁O represents an oxyalkylene group containing 2 to 4 carbon atoms, R₂ represents a hydrogen atom or a hydrocarbon group containing 1 to 3 carbon atoms and n is the mean addition number of moles of the oxyalkylene group and represents a number of 25 to 300;
(b) from 25 to 95 mole per cent of units derived from an unsaturated monocarboxylic ester monomer represented by the general formula (II) 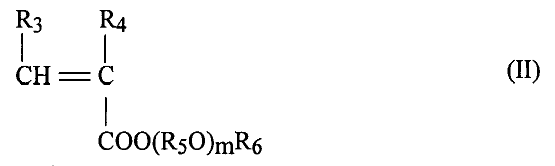 wherein R₃ and R₄ are each hydrogen atoms or methyl, R₅O is a C₂-C₃ oxyalkylene group, m is a number from 1 to 4 and R₆ is C₁-C₃₀ alkyl group;
(c) from 0.05 to 5 mole per cent of units derived from unsaturated ester monomer represented by the general formula (III) 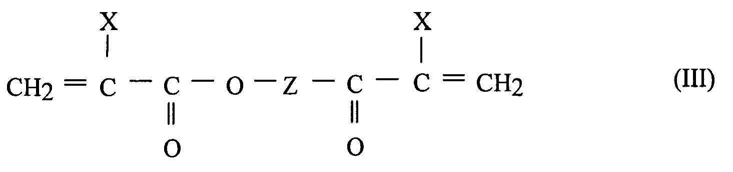 where 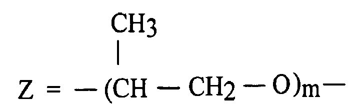 X is H or CH₃ and m is an integer from 2 to 50;
and optionally containing
(d) from 0 to 70 mole per cent of units derived from an unsaturated monocarboxylic acid and a salt thereof represented by the general formula (IV) 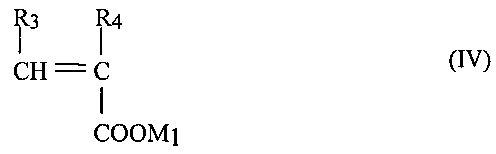 wherein R₃ and R₄ are each hydrogen atoms or methyl and M₁ is hydrogen atom, an alkaline metal, an alkaline earth metal, ammonium, an alkylammonium or substituted alkylammonium group;
and
(e) from 0 to 50 per cent by weight, referred to the weight of the copolymer derived from structure units of formulas (I), (II), (III) and (IV), of low molecular weight glycols represented by the general formula (V)
HO(R₅O)ₘR₆ (V)
wherein R₅O is a C₂-C₃ oxyalkylene group, m is a number of 1 to 4 and R₆ is C₁-C₃₀ alkyl group.

2. A cement additive according to claim 1, wherein monomers of formulas (I), (II), (III) and (IV) are copolymerised with other monomers selected from vinylsulfonic acid, 2-acrylamido-2-methyl-1-propanesulfonic acid, styrene, vinyl acetate and ester of methoxy-polyalkylene glycol with (meth)acrylic acid.

3. A cement additive according to claim 1 or 2, wherein the weight average molecular weight of the copolymer is in the range 8,000 to 1,000,000, in terms of polyethylene glycol as determined by gel permeation chromatography.

4. A cement additive comprising the superplasticizer as defined in any of the claims 1 to 3 and at least one high performance water reducing agent selected from the group consisting of naphthalene sulfonate, melamine sulfonate, polycarboxylate superplasticizers.

5. The cement additive of claim 4, wherein the mixing ratio of the superplasticizer defined in any of the claims 1 to 3 and the high performance water reducing agent is in the range 10 : 90 and 90 : 10.

6. A cement composition comprising cement, aggregates and the cement additive as defined in any of the claims 1 to 5.

7. A cement composition according to claim 6 containing from 0.01 to 3.00 per cent by weight of cement, on a dry basis, of the cement additive as defined in any of the claims 1 to 5.

8. Use of the cement additive according to any of the claims 1 to 5 to mix and disperse a cement mixture.

9. Use of the cement additive according to any of the claims 1 to 5 in liquid or powder form.

10. Use of the cement additive according to any of the claims 1 to 5 in conjunction with alkali-free or low-alkali accelerators.

11. A process for producing the cement additive according to claim 1 by polymerising the monomers (I), (II), (III) and (IV) in suitable solvent at a reaction ratio of 0.1 to 50 mole % of (I) and 25 to 95 mole % of (II), 0.05 to 5 mole % of (III) and 0 to 70 mole % of (IV) and in which the low molecular weight glycol of formula (V) is incorporated in the superplasticizer in one of the following ways or a combination thereof: (a) by addition to the copolymer solution under stirring at the selected temperature until it is completely dissolved, (b) as a residual amount from the production of monomer of formula (II) and (c) by hydrolytic cleavage of the ester bond of units derived from monomer of formula (II) according to the pH conditions.
